# EUROPEAN PATENT SPECIFICATION

(11) **EP 1 471 798 B1**
(45) Date of publication and mention of the grant of the patent: **14.06.2006**
(21) Application number: 03700968.5
(22) Date of filing: 30.01.2003
(51) Int. Cl.: A23K 1/14, C12P 7/06, A23J 1/12, A23J 1/14, A23L 1/105, A23L 1/211

(54) **METHOD AND PLANT FOR CONVERTING GRAINS**
VERFAHREN UND VORRICHTUNG ZUR KONVERSION VON KÖRNERN
PROCEDE ET PLANTE POUR LA CONVERSION DE GRAINES

(30) Priority: 30.01.2002 IT BO20020047
(43) Date of publication of application: 03.11.2004
(73) Proprietor: IBETECH S.R.L., 45012 Ariano nel Polesine (IT)
(72) Inventor: ANGELINI, Andrea, I-40126 Bologna (IT); MENEGATTO, Mario, I-45019 Taglio di Po (IT); PEDRIELLI, Francesco, I-44100 Ferrara (IT)
(74) Representative: Negrini, Elena
(86) International application number: PCT/IB2003/000289
(87) International publication number: WO 2003/063609

(56) References cited:
- WO-A-89/01522
- AT-B- 398 981
- BE-A- 1 003 192
- US-A- 4 001 452
- US-A- 4 407 955
- US-A- 4 448 881
- US-A- 4 810 647
- US-A- 5 662 810
- GUTCHO M.H.: "Feeds for Livestock, Poultry and Pets" 1973 , NOYES DATA CORPORATION , LONDON XP002239398 page 105-108

## Description

### TECHNICAL FIELD

The present invention relates to vegetable products processing and it refers to a method and a plant for converting grains, particularly for using corn, soy, cereals and other similar agricultural products.

There are known methods and plants capable to obtain alcohols, such as ethanol, from fermentation and distillation of corn grains and to generate a aqueous solution with high thermal contents and including, except the starch which is transformed by hydrolysis in glucose, practically all the different components present in the corn, particularly including a remarkable quantity of residual solid products a part of which, being soluble, passes in solution.

The main drawback of said known methods and plants consists in that the contained components in the aqueous solution, particularly proteins by-products, make said solution non reusable in advantageous way. Said solution, before being disposed, must be purified from the polluting components, particularly from solid residues, which must be separately disposed.

The thermal content of aqueous solution also represents a polluting element for disposal; in fact before proceeding to the disposal, it is necessary to provide also further energy expense for removing this thermal content from the aqueous solution.

Further drawback consists in that the presence of solid residues would make difficult the thermal recycling of said thermal contents or of the solution water and therefore said known methods and plants require a constant and conspicuous supply of new water and of energy necessary to heating said water, causing an increase of the costs and of the quantity of polluting products to be disposed or dispersed in the environment.

There are further known methods and plants to obtain animal fodder based to grains in which the fodder in form of dry flour is added with enzymes and subjected to a hot extrusion process, up to over 200°C, that cooks the fodder, transforming it in a kind of compact and continuous paste, which then can be cut in pellets by a cutter, positioned at end of the extruder.

Said last known methods and plants have drawbacks consisting in that the excessive temperature causes the inactivation of many enzymes, reducing the digestibility of the fodder; furthermore the introduction of "dry" state flour into the extruder requires high values of extrusion powers, causing high energetic cost and high usury of extruder components, Document US 4 448 881; US 4 407 955 and AT 398 981 disclose a process for converting grains, comprising millings, hydrolysis, separating off proteins, fermentation.

### DISCLOSURE OF THE INVENTION

The main object of the present invention is to propose a method and a plant for converting grains for providing separately alcohol and an aqueous liquid almost without residual products, in suspension or in solution, derived from the grain proteins.

Other object of the present invention is to propose a method and a plant for providing fodder, in pellets, flour or dry granular product, middle humidity or liquid fodders, having high digestibility and assimilation and safe for animal feeding, with very convenient energetic and consumption costs, thanks to recoveries of energy and products provided by plant and method of the present invention.

Further object of the present invention is to propose a method and a plant fit for using the aqueous liquid and the related thermal contents and for providing bran, oil, amino acids and yeasts, cereals and precooked and sanitized oily seeds, that is without foreign bodies, antinutritional factors, pathogenic bacteria, moulds and mycotoxins.

Other object is to propose a plant fit for effect a continuous cycle production.

Other object of the present invention is to propose a method and a plant capable to use the aqueous liquid and the related thermal contents for carrying out cereals, fermentable sugars, and therefore for transforming them in alcohol, or organic acids, antibiotic or other substances.

### BRIEF DESCRIPTION OT THE DRAWINGS

The characteristics of the present invention are underlined in the following with particular reference to the attached drawings, in which:
- figure 1 shows a diagram of the method object of the present invention in which the phases are represented by rectangles and the initial, intermediate and final products are represented by circles;

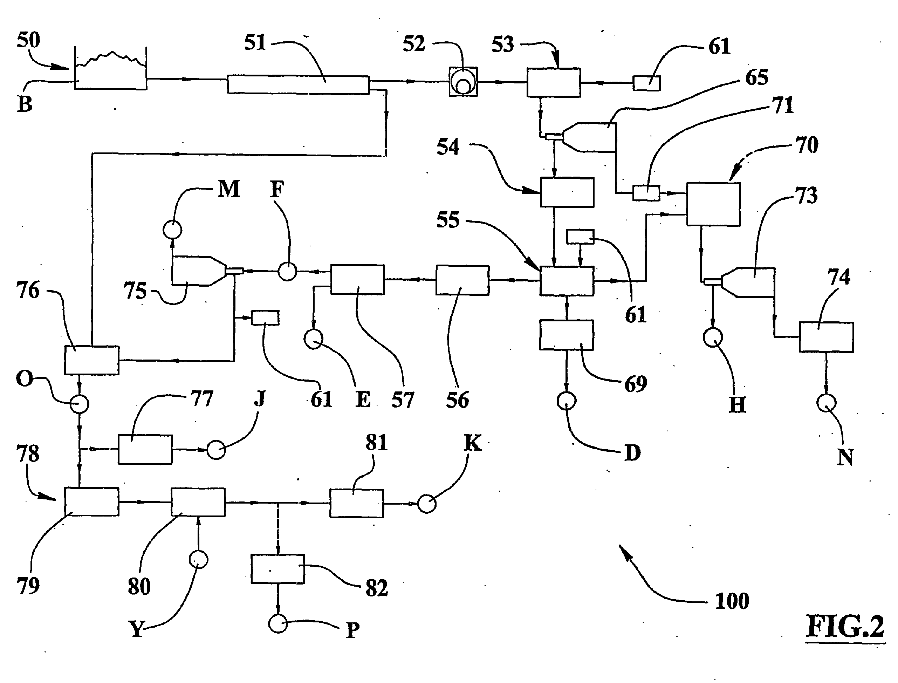

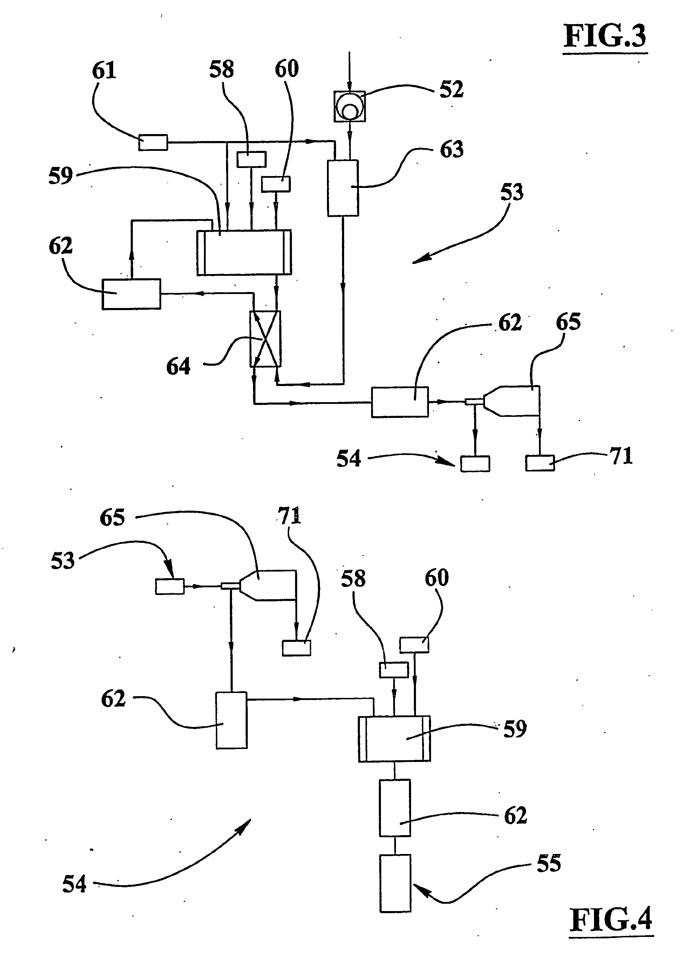

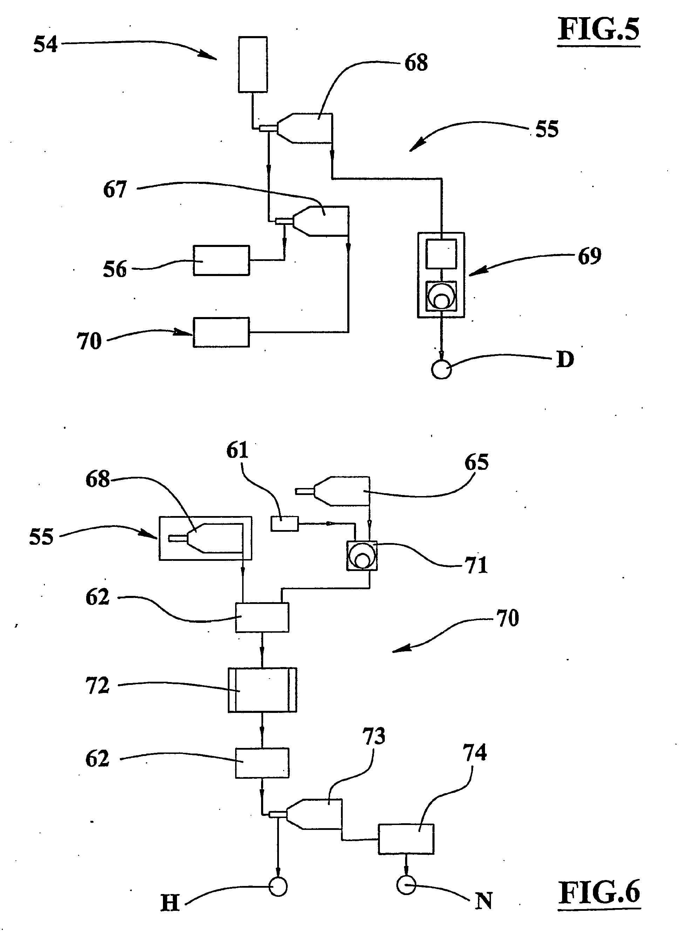

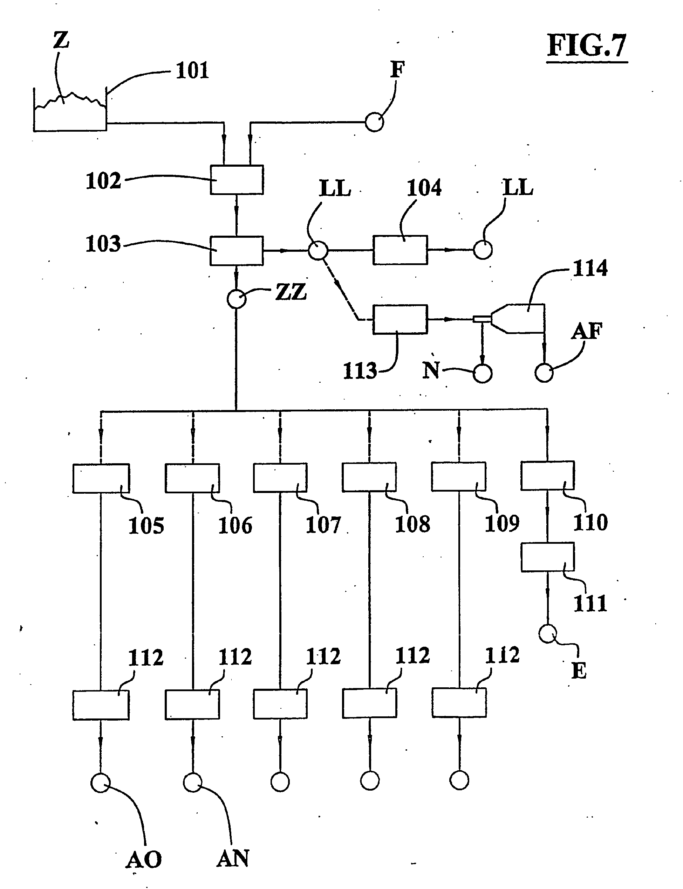

- figure 2 shows a schematic and partial view of the plant object of the present invention;
- figures from 3 to 6 show schematic views of details of figure 2 plant;
- figure 7 shows a schematic view of a variant of figure 2 plant.

### BEST MODE OF CARRYING OUT THE INVENTION

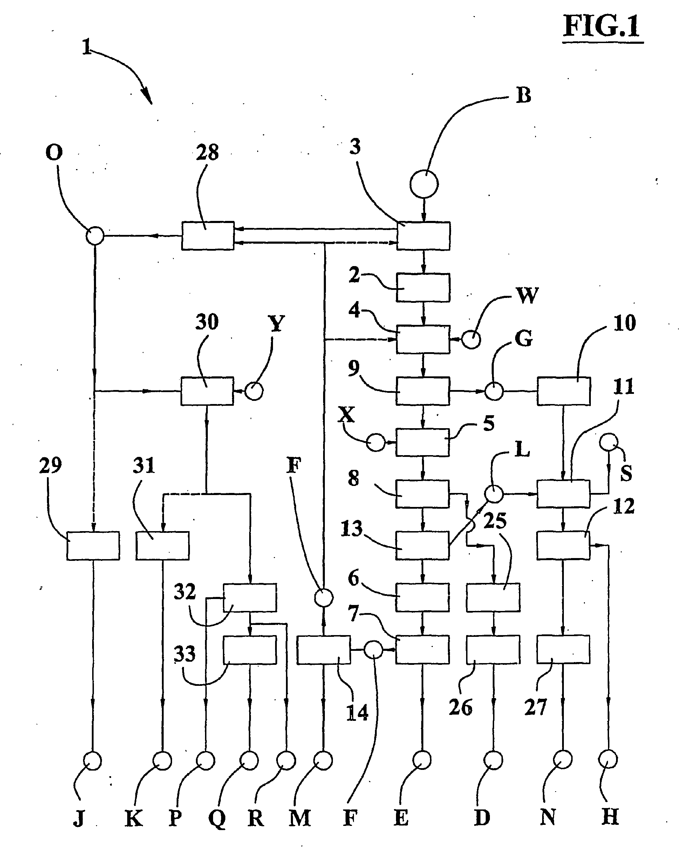

With reference to figure 1, numeral 1 indicates the method for converting grain B, object of the present invention.

The grains B preferably consist of corn grains or soy, cereals or similar and mixtures thereof. It is provided that the grains can be added with materials derived from extraction of oil or others by-products.

The grains B have a fibrous portion, from now on indicated as bran D, and a germ G containing an oily fraction H.

Furthermore grains B contain starch and proteins L in addition to several other substances such as vitamins, mineral salts and ashes.

The method 1 includes in sequence a washing 3, a grinding 2, a first hydrolysis 4 and a germ separation 9 fit for separating the germ G from the remaining portion of grains B.

The grains B without germ G are subjected to a second hydrolysis 5 and to separation of solid fraction 8, so obtaining bran D separated by the remaining part of grains B, which are thus liquid and almost lacking of solid residues.

The grains B, without bran, are subjected to a protein separation 13, obtaining a protein fraction L separated from the remaining parts of grains B, lacking of protein fraction L.

The grains B, in liquid form, without germ, bran D, that is residual solid products, and without protein fraction L, are subjected to a fermentation 6 and to a distillation 7 obtaining separately alcohol E and a aqueous liquid F containing the less volatile fractions and almost lacking of residual products solid or in solution, except to fermentation yeasts.

Grinding 2 is quite rough in order to avoid excessive fragmentation of germ G.

Hydrolyses first 4 and second 5 are obtained through related enzymes mixed to grains B, brought at controlled temperatures, for instance around 95°C and 60°C respectively.

In correspondence of the hydrolyses first 4 and second 5, grains B are also mixed respectively with an alkalizing additive W, for solubilizing the proteins and an acidifier X for insolubilizing the proteins of grains B. Furthermore the alkalizing W and acidifying X additives provide the activation of respective enzymes.

The separations 9, 13 and 8 are carried out through forced decantation or similar separation processes.

Fermentation 6 is carried out by mixing yeasts to grains B, in the liquid form resulting from the preceding phases, and by maintaining the grains in a preset temperature interval for a predetermined time.

The distillation 7 is made by fractional evaporation of fermented grains.

The method provides the addition of water to the grains in correspondence of first hydrolysis 4 and of fermentation 6.

It is further provided that first and second hydrolyses can be unified in a single phase or that the total number of hydrolyses can be more than two.

Washing 3 and grinding 2 predispose grains B to the following manufacturing phases carrying out a mixture, in water, including bran D, starch, proteins L, oils H of germ G besides ashes, sugars and vitamins in proportions varying according to the nature of grains.

The first hydrolysis 4, thanks to the action of the related enzyme on the heated grains, converts the starch, which is splintered and adherent to the germ, in dextrins.

The second hydrolysis 5 converts the dextrins, deriving from the starch of the grains, in sugars, particularly in glucose, through the action of related enzyme and heating.

Fermentation 6 and distillation 7 carry out respectively the conversion of glucose in alcohol and the separation of the latter from the aqueous liquid F, containing yeasts and almost without other solid residues, starches and glucose and having high thermal energy.

The method provides that the aqueous liquid F is eventually used, at least partially, for adding water to grains in method phases, for instance for the washing 3 and for contributing to the heating of grains B in correspondence of first hydrolysis 4.

The method 1 includes a yeast separation 14 from the aqueous liquid F to obtain yeasts M which developed during fermentation 6, separating them from the aqueous liquid F, which is thus purified, namely deprived of solids or of substances in solution. The yeasts M can be stored, dried, subject to hydrolysis and/or to autolysis, to breaking of the cellular membrane by mechanic or enzymatic means, wrapped, reused in the process or added to fodders.

It is also provided that grains B washed, prewashed by the washing 3 or by a further and separate washing phase, are subjected to cooking 28 in the purified aqueous liquid F obtaining sanitized grains B.

These sanitized grains B can be used as humid fodder or they can be subjected to desiccation 29, obtaining a dry fodder J, or they can be subjected to acidification and mixing 30 with solid and/or fluid alimentary additive Y, obtaining a semi finished product for fodder.

The semi finished product can be subjected to extrusion, cut and desiccation 31 obtaining fodder in pellets K or it can be subjected to homogenization 32 obtaining a homogenized fodder P, which can be directly used or subjected to spray desiccation 33 obtaining a soluble flour Q.

The method includes the thin grinding 10 of germ G obtained from the germ separation 9 and to subject the latter to proteolytic hydrolysis 11 together with the protein fraction L obtained from the proteins separation 13.

The proteolytic hydrolysis 11 resolves the germ membrane and it obtains the resolution of proteins released by the germ 13, together with the other proteins deriving from proteins separation 13, in amino acids thanks to the effect of a related enzyme activated by an additive S.

In addition the proteolytic hydrolysis 11 releases the oily portion of the germ.

The products of the proteolytic hydrolysis 11 are subjected to oil separation 12, by forced decantation, obtaining, reciprocally separated, oils H and amino acids N in solution.

This last solution is subjected to concentration 27 obtaining a concentrated solution of amino acids N ready for fodder wrapping, storage or additive process.

The obtained oils H are delivered to suitable storage containers, ready for packaging and sale.

Bran D, separated from the remaining part of grains B by the solid fraction separation 8, is subjected, in sequence, to a desiccation 25 and to a bran grinding 26 obtaining bran D containing gluten.

The plant 100 for converting grains, object of present invention, includes in cascade connection container and moving means 50 of grains B; washing means 51; grinding means 52; a first hydrolysis station 53; germ separating means 65, for instance of centrifugal type, provided with an outlet for germ and an outlet for grains B without the germ.

The last outlet is connected in cascade to a second hydrolysis station 54 and to a separating station 55 provided with an outlet for a protein fraction, an outlet for a solid fraction, substantially consisting of bran, and an outlet for the remaining liquid fraction of grains B.

This last outlet is connected in cascade to a fermentation station 56 and to a distillation station 57, of evaporation and condensation type, having separate outlets for alcohol and for an aqueous liquid almost without solid fraction, starches, oils, and proteins.

Connecting means, including pipes, valves, pumping means and known and not shown intermediate reservoirs, connect the means and the stations of plant 100.

The container and moving means 50 of grains B include a collecting tank provided with a cochlea, known and not shown, for loading a silo container from which grains B are taken for the transport, by a belt or the like, into washing means 51.

The grinding means 52 are capable to make a rough grinding, avoiding the pulverization of grains.

The grinding means 52 are connected to the first hydrolysis station 53 through hydration and store means 63. These last means 63 are connected to water delivering means 61 for adding the grinded grains B with water and for compensating flow irregularity of grains B.

Each hydrolysis station first 53 and second 54 includes a thermoregulated enzymatic room 59 for grains B and into which enzyme delivering means 58 and additive delivering means 60 flow. The delivering means 58, 60 include respective tanks reservoirs and proportioners for regulating the quantities of enzymes and acidifying additive mixed, with the grains B. Furthermore each hydrolysis station, first 53 and second 54, includes store means 62, consisting of tanks, positioned upstream and downstream the related enzymatic room 59 to allow an almost constant flow of grains B in the plant 100.

The first hydrolysis station 53 includes water delivery water 61 flowing into the respective enzymatic room 59 and heat exchanger means 64, for instance of countercurrent type, inserted into the inlet and outlet connections of the first hydrolysis station 53 for the heat regenerating.

It is also provided that the first 53 and second 54 hydrolysis stations can be integrated in a single hydrolysis station.

The fermentation station 56 is provided with fermentation yeast delivering means and with a connection, not shown, to the water delivering means 61.

The separation station 55 includes separating means of the solid fraction 68, of filter or centrifugal type, whose inlet is connected to the outlet of the second hydrolysis station 54 and whose outlets of liquid and solid fractions are respectively connected to an inlet of protein fraction separating means 67, of centrifugal type, and to bran treatment means 69.

The bran treatment means 69 include, in cascade, a warm air drier, a grindstone and a rotary feeder providing at the outlet bran D with gluten.

The protein fraction outlet of the protein fraction separating means 67 is connected to the second treatment means 70 and the non-protein fraction outlet is connected to the fermentation station 56.

The germ outlet of germ separating means 65 is connected to the second treatment means 70 through grinding means 71 capable to finely grind the germ fragments.

The second treatment means 70 include first store means 62 into which the protein fraction outlet of the protein fraction separating means 67 and the outlet of the grinding means 71 joint. The first store means 62 of second treatment means 70, feed proteolytic hydrolysis means 72 for the hydrolysis of the protein fraction and of the ground germ. The outlet of the proteolytic hydrolysis means 72 is connected, through second store means 62 of second treatment means 70, to amino acid separating means 73, whose amino acids outlet is connected to concentration means 74 for providing concentrated amino acids N. The remaining outlet of the amino acids separating means 73 provides an oily fraction H that is delivered to a respective containment reservoir for the further use.

It is also provided that the protein fraction separating means 67 and the solid fraction separating means 68 of the separating station 55 can be included in a single device of the type said tricanter.

The germ separating means 65, the separating station 55, the second treatment means 70 are connected to the water delivering means 61.

These last ones are connected to the waterworks or even to the aqueous liquid F outlet of distillation station 57.

This last outlet is connected to yeast separating means 75, of centrifugal type, an outlet of which provides yeasts M. The remaining outlet is connected to known cooking means 76 of grains B taken from washing means 51 to provides sanitized grains B by cooking at temperature lower than the temperature which causes a reduction of the alimentary values of sanitized and cooked grains.

It is also provided that suitable and specific washing means can feed the cooking means 76 with grains B.

The outlet of cooking means 76 is connected to third treatment means 78 cascade including, acidification means 79 and mixer means 80 fit for mixing grains sanitized and cooled after the cooking, with solid, fluid or containing enzymes alimentary additives Y. Furthermore the mixer means 80 can charge the sanitized grains B with amino acids N, and/or with other products of the plant 100, also transformed or modified.

The outlet of mixer means 80 is connected to pellet fodder production means 81, of known type, in order to provide pellet fodder K also in other commercial form.

It is also provided that the outlet of alimentary additive mixer means 80 can be connected to flour fodder production means 82 including in cascade a homogenizer and a drier of so called spray type or having similar functions, to provide flour fodder P.

Furthermore it is provided that the outlet of cooking means 76 can be connected to desiccation means 77 to provide a dry fodder J.

Obviously the plant 100 can provide medium humidity or liquid fodders R.

The variant of plant 100 of figure 7 further include a leaching station 102 fed by oil-free grains Z, consisting of soy panels or residual seeds of an oil extraction process, and fed by the aqueous liquid F, respectively through supply means 101 and through the distillation station 57.

The outlet of leaching station 102 is connected to sugar separating means 103, whose outlets separately provides a sugary fraction ZZ and a hyperproteic fraction LL of oil-free grains Z.

The outlet of this last fraction LL is connected to hyperproteic fraction concentration means 104 to provide the hyperproteic fraction LL in concentrated form.

The outlet of sugary fraction ZZ of sugars separating means 103 is cascade connected to alcoholic fermenter means 110 and to distiller means 111 to provide alcohol E.

Obviously, in alternative, the outlet of sugary fraction ZZ of sugar separating means 103 can be cascade connected to the fermentation station 56 and to the distillation station 57.

The outlet of the fraction sugary ZZ of the sugar separating means 103 can be also connected to first 105 and second 106 fermenter means to provide respectively acids organic AO, antibiotics AN, which are concentrated by respective concentrators 112.

Furthermore, the outlet of sugary fraction ZZ of sugar separating means 103 can be connected to fermenter means, third 107 forth 108 and fifth 109, connected to respective concentrators 112 in order to obtain different substances for agricultural, zootechnical or industrial use, through fermentations carried out by respective microorganism and/or mold strains.

It is provided that the outlet of sugar separating means 103 can be connected to respective proteolytic hydrolysis means 113 which feed a separator 114 fit for separately providing amino acids N and dietary fiber AF.

A possible operation of this variant provides to subject oil-free grains Z, mixes with aqueous liquid F, to leaching in acid environment and to separate the leaching product in a hyperproteic fraction LL, fit for concentration, and in its sugary fraction ZZ. The latter mainly consists of fermentable sugars, which are subjected to an alcoholic fermentation and to a distillation to obtain alcohol E.

Parallely or in alternative, the sugary fraction ZZ originates acids organic, antibiotics and other products through respective fermentations followed by related concentrations.

The main advantage of the present invention is to provide a method and a plant for converting grains for separately providing alcohol and an aqueous liquid practically without polluting solid residual products.

Other advantage of the present invention is to provide a method and a plant fit for providing fodders, in pellets, in flour form or in dry grains, medium humidity or liquid fodders, having high digestibility and assimilation and safe for animal feeding, said method and a plant being capable to use the aqueous liquid and the related thermal contents besides to provide bran, oil, amino acids and separate yeasts.

Other advantage is to provide a plant fit for effect a continuous cycle production.

Other advantage is to provide a method and a plant capable to use the aqueous liquid and the related thermal contents for carrying out from oil-free seeds fermentable sugars, and therefore for transforming them in alcohol or organic acids, antibiotics or other substances.

## Claims

1. Method for converting grains (B), containing at least starch, bran (D), germ (G) and proteins (L), including a washing (3), a grinding (2), at least a hydrolysis (4, 5) through enzymes, a fermentation (6) through yeasts and a distillation (7) of grains (B); said method (1) being **characterized in that** it provides:
- to subject grains (B), before fermentation (6), to a protein separation (13), obtaining a protein fraction (L) separated from grains (B);
- to subject grains (B) without the protein fraction (L) to fermentation (6);
- to subject to distillation (7) grains (B), without the protein fraction (L) and fermented, obtaining alcohol (E) and an aqueous liquid (F) practically without residual proteins by-products.
- to include a first (4) and a second (5) hydrolysis;
- to subject grains (B) to solid fraction separation (8) downstream the second hydrolysis (5) obtaining bran (D) and bran-free grains (B);
- to subject said grains to proteins separation (13) downstream of the solid fraction separation (8);
- to effect a germ separation (9) from grains (B) after first hydrolysis (4) and before fermentation (6);
- to subject the germ (G) to grinding (10);
- to subject the ground germ (G) to proteolytic hydrolysis (11) obtaining a solution containing an oily fraction (H).

2. Method according to claim 1 **characterized in that** provides to subject the aqueous liquid (F) obtained by distillation (7) to yeast separation (14) obtaining yeast (M) and achieving the purification of aqueous liquid (F) to be used at least partially at least for washing (3) and to provide at least partially the thermal energy of aqueous liquid (F) for heating grains (B) during at least one of the hydrolyses (4, 5).

3. Method according to claim 1 **characterized in that** provides:
- to charge grains (B) with at least an alkalizing additive (W) and acidifying additive (X) in correspondence of hydrolyses respectively first (4) and second (5);
- to subject the protein fraction (L) separated from grains (B) to proteolytic hydrolysis (11) obtaining amino acids (N) in solution;
- to subject the last solution to concentration (27) obtaining a concentrated solution of amino acids (N).

4. Method according to claim 3 **characterized in that** provides to subject the germ (G) to proteolytic hydrolysis (II) together with the protein fraction (L) downstream the grinding . (10) of germ (G) and the proteins separation (13) and to subject the product of proteolytic hydrolysis (11) to oil separation (12) in order to separate the oily fraction (H) from the amino acids (N).

5. Method according to claim 1 **characterized in that** provides to take at least part of grains (B) from washing (3) and to subject said part to cooking (28) in the aqueous liquid (F) purified through yeast separation (14) obtaining sanitized grains (O).

6. Method according to any of preceding claims **characterized in that** provides:
- to mix oil-free grains (Z) with the aqueous liquid (F) and to subject the mixture to leaching in acid environment;
- to separate the leaching product in a hyperproteic fraction (LL), fit for concentration at least, and in a sugary fraction (ZZ);
- to subject sugary fraction (ZZ) at least to alcoholic fermentation and to distillation means to obtain alcohol (E), and/or to fermentation means followed eventually from related concentration means in order to obtain, separate and concentrated, at least one between organic acids (AO), antibiotics (AN).

7. Method according to claims 2, and 3 **characterized in that** grains (B) to be subject to fermentation (6) substantially consist of a glucose solution carried out through the hydrolyses (4, 5) of the starch of grains (B) deprived of germ (G), bran (D) and proteins (L) respectively through germ separation (9), solid fraction separation (8) and proteins separation (13).

8. Plant for converting grains **characterized in that** it includes in cascade at least:
- container and moving means (50) of grains (B);
- washing means (51);
- grinding means (52);
- a first hydrolysis station (53);
- a second hydrolyses station (54);
- a separating station (55) having separate outlets at least for the solid fraction and the liquid fraction of grains (B);
- a fermentation station (56) connected to the liquid fraction outlet;
- a distillation station (57) having separate outlets for alcohol (E) and for a aqueous liquid (F);
- the separating station (55) includes at least solid fraction separating means (68) whose inlet is connected to the outlet of the second hydrolysis station (54) and whose outlets of the liquid and solid fractions are connected respectively to the inlet of fermentation station (56) and to bran treatment means (69);
- the liquid fraction outlet of solid fraction separating means (68) and the inlet of fermentation station (56) are connected through a non protein fraction inlet and outlet of protein fraction separating means (67) of the separating station (55), a protein fraction outlet of protein fraction separating means (67) is connected to second treatment means (70);
- the plant including germ separating means (65) having the inlet and the outlet for the germ-free fraction, interposed between the outlet and the inlet respectively of the hydrolysis stations first (53) and second (54), and having the germ outlet connected to second treatment means (70) through grinding means (71);
- the second treatment means (70) include proteolytic hydrolysis means (72) for the hydrolysis of the protein fraction and of the ground germ, whose outlet is connected to amino acids separating means (73), whose amino acids outlet is connected to concentration means (74), in order to provide concentrated amino acids (N), and whose remaining outlet provides an oily fraction (H).

9. Plant according to claim 8 **characterized in that** includes hydration and store means (63) interconnected between grinding means (52) and first hydrolysis station (53) and connected to water delivering means (61).

10. Plant according to claim 8 **characterized in that** the protein fraction separating means (67) and the solid fraction separating means (68) are integrated in a tricanter device.

11. Plant according to claim 8 **characterized in that** germ separating means (65), separating station (55), second treatment means (70) are connected to water delivering means (61) that are connected to at least one between waterworks and aqueous liquid (F) outlet of the distillation station (57), and the aqueous liquid (F) outlet of the distillation station (57) is connected to yeast separating means (75) an outlet of which provides yeasts and the remaining one feeds at least one between water delivering means (61) and cooking means (76) of grains (B), taken by washing means (51) in order to provide sanitized grains (B).

12. Plant according to claim 11 **characterized in that** the cooking means (76) outlet is connected to at least one between desiccation means (77), and third treatment means (78) that include, in cascade, acidification means (79) and alimentary additive mixer means (80) whose outlet is connected to at least one between pellets fodder production means (81) and flour fodder production means (82).

13. Plant according to any of claims from 8 to 12 **characterized in that** includes a leaching station (102), fed with free-oil grains (Z) and with aqueous liquid (F) respectively from supply means (101) and from the distillation station (57) and connected at the outlet to sugar separating means (103), whose outlets separately provide a sugary fraction (ZZ) and a fraction hyperproteic (LL) of free-oil grains (Z).

14. Plant according to claim 13 **characterized in that** the sugary fraction (ZZ).outlet of sugar separating means (103) is cascade connected at least to one from an alcoholic fermenter means (110) followed by distiller means (111) in order to provide alcohol (E) and/or at least to one among first (105), second (106), third (107), forth (108), fifth (109) fermenter means to provide; at least, organic acids (AO) and antibiotics (AN).

15. Plant according to claim 13 **characterized in that** the outlet (LL) of sugar separating means (103) is connected to respective proteolytic hydrolysis means (113), which feed a separator (114) fit for separately providing amino acids (N) and dietary fiber (AF).

## Patentansprüche

1. Verfahren zum Umwandeln von Körnern (B) mit zumindest Stärke, Kleie (D), Keimling (G) und Proteinen (L) darin, mit einem Waschvorgang (3), einem Mahlvorgang (2), mindestens einer Hydrolyse (4, 5) durch Enzyme, einer Gärung (6) durch Hefen und einer Destillierung (7) der Körner (B); wobei das Verfahren (1) **dadurch gekennzeichnet ist, dass** es folgendes vorsieht:
- aus den Körnern (B) vor der Gärung (6) das Protein abzutrennen (13) und einen von den Körnern (B) getrennten Proteinanteil (L) zu erhalten;
- die Körner (B) ohne den Proteinanteil (L) gären zu lassen (6);
- die Körner (B) ohne den Proteinanteil (L) zu destillieren und nach der Gärung Alkohol (E) und eine wässrige Flüssigkeit (F) praktisch ohne Restproteine als Nebenprodukte zu erhalten;
- eine erste (4) und eine zweite (5) Hydrolyse einzubeziehen;
- stromab der zweiten Hydrolyse (5) den Feststoffanteil von den Körnern (B) abzutrennen (8) und Kleie (D) und kleiefreie Körner (B) zu erhalten;
- stromab der Abtrennung des Feststoffanteils Proteine aus den Körnern (B) abzutrennen (13);
- nach der ersten Hydrolyse (4) und vor der Gärung (6) den Keimling von den Körnern (B) abzutrennen (9);
- den Keimling (G) zu mahlen (10);
- den gemahlenen Keimling (G) proteoloytisch zu hydrolysieren (11) und eine Lösung mit einem Ölanteil (H) darin zu erhalten.

2. Verfahren nach Anspruch 1, **dadurch gekennzeichnet, dass** es vorsieht, aus der durch die Destillierung (7) erhaltenen wässrigen Flüssigkeit (F) die Hefen abzutrennen (14) und Hefe (M) zu erhalten und die Reinigung der wässrigen Flüssigkeit (F) zu erreichen, welche zumindest zum Teil zumindest zum Waschen (3) verwendet wird, um während mindestens einer von den Hydrolysen (4, 5) die Wärmeenergie der wässrigen Flüssigkeit (F) zumindest zum Teil zum Erhitzen der Körner (B) bereitzustellen.

3. Verfahren nach Anspruch 1, **dadurch gekennzeichnet, dass** es vorsieht,
- den Körnern (B) in Entsprechung zu der ersten (4) bzw. der zweiten (5) Hydrolyse mindestens einen alkalisierenden Zusatzstoff (W) und einen säuernden Zusatzstoff (X) zuzusetzen;
- den von den Körnern (B) abgetrennten Proteinanteil (L) proteolytisch zu hydrolysieren (11) und Aminosäuren (N) in Lösung zu erhalten;
- die letztere Lösung zu konzentrieren (27) und eine konzentrierte Lösung der Aminosäuren (N) zu erhalten.

4. Verfahren nach Anspruch 3, **dadurch gekennzeichnet, dass** es vorsieht, den Keimling (G) zusammen mit dem Proteinanteil (L) stromab des Mahlvorgangs (10) des Keimlings (G) proteolytisch zu hydrolysieren (11) und die Proteine abzutrennen (13) und aus dem Produkt der proteolytischen Hydrolyse das Öl abzutrennen (12), um den Ölanteil (H) aus den Aminosäuren (N) abzutrennen.

5. Verfahren nach Anspruch 1, **dadurch gekennzeichnet, dass** es vorsieht, zumindest einen Teil der Körner (B) aus dem Waschvorgang (3) zu entnehmen und den Teil in der durch die Hefenabtrennung (14) gereinigten wässrigen Flüssigkeit (F) zu kochen (28).

6. Verfahren nach einem der vorhergehenden Ansprüche, **dadurch gekennzeichnet, dass** es folgendes vorsieht:
- ölfreie Körner (Z) mit der wässrigen Flüssigkeit (F) zu mischen und die Mischung in saurer Umgebung auszulaugen;
- das Auslaugprodukt zumindest konzentrationsfertig in einem hyperproteinischen Anteil (LL) und in einem zuckerigen Anteil (ZZ) abzutrennen;
- auf den zuckerigen Anteil (ZZ) zumindest durch alkoholische Gärungsmittel und Destillationsmittel, um Alkohl (E) zu erhalten und/oder durch Gärungsmittel einzuwirken, wonach schließlich zugehörige Konzentrierungsmittel folgen, um getrennt und konzentriert mindestens eines von organischen Säuren (AO) und Antibiotika zu erhalten.

7. Verfahren nach den Ansprüchen 2 und 3, **dadurch gekennzeichnet, dass** die zu vergärenden (6) Körner (B) im wesentlichen aus einer Glucoselösung bestehen, die durch die Hydrolysen (4, 5) der Stärke der von dem Keimling (D), der Kleie (D) und den Proteinen (L) befreiten Körner (B) bzw. durch die Abtrennung (9) des Keimlings, die Abtrennung (8) des Feststoffanteils und die Abtrennung (13) der Proteine hergestellt wurde.

8. Anlage zum Umwandeln von Körnern, **dadurch gekennzeichnet, dass** sie kaskadenartig zumindest folgendes umfasst:
- einen Behälter und Bewegungsmittel (50) für die Körner (B);
- Waschmittel (51);
- Mahlmittel (52);
- eine erste Hydrolysestation (53);
- eine zweite Hydrolysestation (54);
- eine Trennstation (55) mit getrennten Ausgängen zumindest für den Feststoffanteil und den flüssigen Anteil der Körner (B);
- eine Gärstation (56), welche mit dem Ausgang des flüssigen Anteils verbunden ist;
- eine Destillierstation (57) mit getrennten Ausgängen für den Alkohol (E) und für eine wässrige Flüssigkeit (F);
- wobei die Trennstation (55) zumindest Feststoffanteiltrennmittel (68) umfasst, deren Eingang mit dem Ausgang der zweiten Hydrolysestation (54) verbunden ist, und deren Ausgänge für den flüssigen und den Feststoffanteil jeweils mit dem Eingang der Gärstation (56) und mit Kleieaufbereitungsmitteln (69) verbunden sind;
- der Ausgang der Feststoffanteiltrennmittel (68) und der Eingang der Gärstation (56) durch einen Eingang für den nichtproteinischen Anteil und den Ausgang der Proteinanteiltrennmittel (67) der Trennstation (55) verbunden sind und ein Proteinanteilausgang der Proteinanteiltrennmittel (67) ist zweiten Aufbereitungsmitteln (70) verbunden ist;
- in der Anlage mit den Kleieabtrennmitteln (65) sind der Eingang und der Ausgang für den kleiefreien Anteil zwischen dem Ausgang bzw. dem Eingang der ersten (53) und der zweiten (54) Hydrolysestation eingefügt, und der Kleieausgang ist durch Mahlmittel (71) mit den zweiten Aufbereitungsmitteln (70) verbunden;
- die zweiten Aufbereitungsmittel (70) umfassen proteolytische Hydrolysemittel (72) zur Hydrolyse des Proteinanteils und des gemahlenen Keimlings, deren Ausgang mit Aminosäurenabtrennmitteln (73) verbunden ist, deren Aminosäurenausgang zur Bereitstellung konzentrierter Aminosäuren (N) mit Konzentrierungsmitteln (74) verbunden ist und deren verbleibender Ausgang einen Ölanteil (H) bereitstellt.

9. Anlage nach Anspruch 8, **dadurch gekennzeichnet, dass** sie Hydratations- und Lagerungsmittel (63) enthält, welche zwischen den Mahlmitteln (52) und der ersten Hydrolysestation (53) eingefügt und mit Wasserliefermitteln (61) verbunden sind.

10. Anlage nach Anspruch 8, **dadurch gekennzeichnet, dass** die Proteinanteiltrennmittel (67) und die Feststoffanteiltrennmittel (68) in einem Tricanter integriert sind.

11. Anlage nach Anspruch 8, **dadurch gekennzeichnet, dass** die Kleieabtrennmittel (65), die Trennstation (55) und die zweiten Autfbereitungsmittel (70) mit Wasserliefermitteln (61) verbunden sind, welche mit mindestens einem von einem Wasserwerk und einem Ausgang für wässrige Flüssigkeit (F) an der Destillierstation (57) verbunden sind, und der Ausgang für wässrige Flüssigkeit (F) an der Destillierstation (57) mit Hefeabtrennmitteln (75) verbunden ist, deren erster Ausgang derselben Hefen bereitstellt und deren zweiter mindestens eines von Wasserliefermitteln (61) und Kochmitteln (76) für die Körner (B) zuführt, die zur Bereitstellung von desinfizierten Körnern (B) von den Waschmitteln (51) aufgenommen wurden.

12. Anlage nach Anspruch 11, **dadurch gekennzeichnet, dass** der Ausgang der Kochmittel (76) mit mindestens einem von Trocknungsmitteln (77) und dritten Aufbereitungsmitteln (78) verbunden ist, welche kaskadenartig Säuerungsmittel (79) und Mischmittel (80) für Ernährungszusatzmittel umfassen, deren Ausgang mit mindestens einem von Pelletfutterherstellungsmitteln (80) und Mehlfutterherstellungsmitteln (82) verbunden ist.

13. Anlage nach einem der Ansprüche von 8 bis 12, **dadurch gekennzeichnet, dass** sie eine Auslaugstation (102) umfasst, welche mit ölfreien Körnern (Z) und mit einer wässrigen Flüssigkeit (F) jeweils von Zuführmitteln (101) und von der Destillierstation (57) beschickt wird und an dem Ausgang mit Zuckerabtrennmitteln (103) verbunden ist, deren Ausgänge gesondert einen zuckerigen Anteil (ZZ) und einen hyperproteinischen Anteil (LL) von ölfreien Körnern (Z) bereitstellen.

14. Anlage nach Anspruch 13, **dadurch gekennzeichnet, dass** der Ausgang des zuckerigen Anteils (ZZ) an den Zuckerabtrennmitteln (103) kaskadenförmig mit mindestens einem von einem alkoholischen Gärmittel (110) und dann mit einem Destillationsmittel (111) verbunden ist, um Alkohol (E) bereitzustellen, und/oder mit mindestens einem von einem ersten (105), einem zweiten (106), einem dritten (107), einem vierten (108) und einem fünften (109) Gärmittel verbunden ist, um zumindest organische Säuren (AO) und Antibiotika (AN) bereitzustellen.

15. Anlage nach Anspruch 13, **dadurch gekennzeichnet, dass** der Ausgang (LL) der Zuckerabtrennmittel (103) mit jeweiligen proteolytischen Analysemitteln (113) verbunden ist, die einen Separator (114) speisen, der zur getrennten Bereitstellung von Aminosäuren (N) und einer diätetischen Faser (AF) geeignet ist.

## Revendications

1. Procédé pour convertir des grains (B), contenant au moins de l'amidon, du son (D), du germe (G), et des protéines (L), comprenant un lavage (3), un broyage (2), au moins une hydrolyse (4, 5) au moyen d'enzymes, une fermentation (6) au moyen de levures et une distillation (7) des grains (B) ; ledit procédé (1) étant **caractérisé en ce qu'**il propose de :
soumettre les grains (B), avant la fermentation (6), à une séparation de protéines (13), pour obtenir une fraction de protéines (L) séparée des grains (B) ;
soumettre les grains (B) sans la fraction de protéines (L) à une fermentation (6) ;
soumettre à une distillation (7) les grains (B), sans la fraction de protéines (L) et fermentés, pour obtenir un alcool (E) et un liquide aqueux (F) pratiquement sans sous-produits résiduels de protéines ;
inclure une première hydrolyse (4) et une seconde hydrolyse (5) ;
soumettre les grains (B) à une séparation de fraction solide (8) en aval de la seconde hydrolyse (5) pour obtenir le son (D) et des grains exempts de son (B) ;
soumettre lesdits grains à une séparation de protéines (13) en aval de la séparation de la fraction solide (8) ;
réaliser une séparation du germe (9) des grains (B) après la première hydrolyse (4) et avant la fermentation (6) ;
soumettre le germe (G) à un broyage (10) ;
soumettre le germe broyé (G) à une hydrolyse protéolytique (11) pour obtenir une solution contenant une fraction huileuse (H).

2. Procédé selon la revendication 1 **caractérisé en ce qu'**il propose de soumettre le liquide aqueux (F) obtenu par distillation (7) à une séparation de la levure (14) pour obtenir la levure (M) et réaliser la purification du liquide aqueux (F) à utiliser au moins partiellement au moins pour laver (3) et fournir au moins partiellement l'énergie thermique du liquide aqueux (F) pour chauffer les grains (B) au cours d'au moins une des hydrolyses (4, 5).

3. Procédé selon la revendication 1 **caractérisé en ce qu'**il propose de :
charger les grains (B) avec au moins un additif alcalifiant (W) et un additif acidifiant (X) correspondants respectivement à la première hydrolyse (4) et la seconde hydrolyse (5) ;
soumettre la fraction de protéines (L) séparée des grains (B) à une hydrolyse protéolytique (11) pour obtenir des acides aminés (N) en solution ;
soumettre la dernière solution à une concentration (27) pour obtenir une solution concentrée d'acides aminés (N).

4. Procédé selon la revendication 3 **caractérisé en ce qu'**il propose de soumettre le germe (G) à une hydrolyse protéolytique (11) conjointement avec la fraction de protéines (L) en aval du broyage (10) du germe (G) et la séparation des protéines (13) et de soumettre le produit de l'hydrolyse protéolytique (11) à une séparation d'huile (12) afin de séparer la fraction huileuse (H) des acides aminés (N).

5. Procédé selon la revendication 1 **caractérisé en ce qu'**il propose de prendre au moins une partie des grains (B) du lavage (3) et de soumettre ladite partie à une cuisson (28) dans le liquide aqueux (F) purifié par séparation de l'amidon (14) pour obtenir des grains aseptisés (O).

6. Procédé selon l'une quelconque des revendications précédentes **caractérisé en ce qu'**il propose de :
mélanger des grains exempts d'huile (Z) au liquide aqueux (F) et soumettre le mélange à une lixiviation dans un environnement acide ;
séparer le produit de lixiviation en une fraction hyperprotéique (LL), acceptable au moins pour une concentration, et en une fraction sucre (ZZ) ;
soumettre la fraction sucre (ZZ) au moins à des moyens de fermentation alcoolique et à des moyens de distillation pour obtenir un alcool (E), et/ou à des moyens de fermentation suivis éventuellement de moyens de concentration pour obtenir, au moins un parmi des acides organiques (AO) et des antibiotiques (AN), séparés et concentrés.

7. Procédé selon la revendication 2 et la revendication 3 **caractérisé en ce que** les grains (B) destinés à être soumis à la fermentation (6) comprennent essentiellement une solution de glucose obtenue via les hydrolyses (4, 5) de l'amidon des grains (B) exempts du germe (G), du son (D) et des protéines (L) respectivement par la séparation du germe (9), la séparation de la fraction solide (8) et la séparation des protéines (13).

8. Installation pour convertir des grains **caractérisée en ce qu'**elle comprend en cascade au moins :
- un récipient et des moyens de déplacement (50) des grains (B) ;
- des moyens de lavage (51) ;
- des moyens de broyage (52) ;
- une première station d'hydrolyse (53) ;
- une seconde station d'hydrolyse (54) ;
- une station de séparation (55) ayant des canaux de sortie séparés au moins pour la fraction solide et la fraction liquide de grains (B) ;
- une station de fermentation (56) reliée au canal de sortie de la fraction liquide ;
- une station de distillation (57) ayant des canaux de sortie séparés pour l'alcool (E) et pour un liquide aqueux (F) ;
- la station de séparation (55) comprend au moins des moyens de séparation de la fraction solide (68) dont le canal d'entrée est relié au canal de sortie de la seconde station d'hydrolyse (54) et dont les canaux de sortie de la fraction liquide et de la fraction solide sont connectés respectivement au canal d'entrée de la station de fermentation (56) et aux moyens de traitement du son (69) ;
- le canal de sortie de la fraction liquide des moyens de séparation de la fraction solide (68) et le canal d'entrée de la station de fermentation (56) sont reliés via un canal d'entrée de la fraction non protéine et le canal de sortie des moyens de séparation de la fraction protéine (67) de la station de séparation (55), un canal de sortie de la fraction protéine des moyens de séparation de la fraction protéine (67) est relié aux seconds moyens de traitement (70) ;
- l'installation comprenant des moyens de séparation du germe (65) ayant le canal d'entrée et le canal de sortie pour la fraction exempte du germe, disposée entre le canal de sortie et le canal d'entrée respectivement de la première (53) et la seconde (54) stations d'hydrolyse, et ayant le canal de sortie du germe relié aux seconds moyens de traitement (70) via les moyens de broyage (71) ;
- les seconds moyens de traitement (70) comprennent des moyens d'hydrolyse protéolytique (72) pour l'hydrolyse de la fraction protéique et du germe broyé, dont le canal de sortie est relié aux moyens de séparation des acides aminés (73), dont le canal de sortie des acides aminés est relié aux moyens de concentration (74), pour obtenir les acides aminés concentrés (N), et dont le canal de sortie restant fournit une fraction huileuse (H).

9. Installation selon la revendication 8 **caractérisée en ce qu'**elle comprend des moyens d'hydratation et de stockage (63) interconnectés entre les moyens de broyage (52) et la première station d'hydrolyse (53) et connectés à des moyens de distribution d'eau (61).

10. Installation selon la revendication 8 **caractérisée en ce que** les moyens de séparation de la fraction protéique (67) et les moyens de séparation de la fraction solide (68) I sont intégrés à un dispositif Tricanter.

11. Installation selon la revendication 8 **caractérisée en ce que** les moyens de séparation du germe (65), la station de séparation (55), les seconds moyens de traitement (70) sont reliés aux moyens de distribution d'eau (61) qui sont reliés à au moins un parmi des installations d'adduction d'eau et le canal de sortie du liquide aqueux (F) de la station de distillation (57), et le canal de sortie du liquide aqueux (F)de la station de distillation (57) est relié aux moyens de séparation de levure (75) dont un canal de sortie fournit des levures et l'autre alimente au moins un parmi les moyens de distribution d'eau (61) et les moyens de cuisson (76) des grains (B), pris par les moyens de lavage (51) pour obtenir des grains aseptisés (B).

12. Installation selon la revendication 11 **caractérisée en ce que** le canal de sortie des moyens de cuisson (76) est relié à au moins un parmi les moyens de déshydratation (77) et des troisième moyens de traitement (78) qui comprennent, en cascade, des moyens d'acidification (79) et des moyens de mélange d'additifs alimentaires (80) dont le canal de sortie est relié à au moins un parmi des moyens de production d'aliments fourrage en boulettes (81) et des moyens de production d'aliments fourrage en farine (82).

13. Installation selon l'une quelconque des revendications 8 à 12 **caractérisée en ce qu'**elle comprend une station de lixiviation (102), alimentée avec des grains exempts d'huile (Z) et avec le liquide aqueux (F) respectivement des moyens d'alimentation (101) et de la station de distillation (57) et reliée au canal de sortie aux moyens de séparation du sucre (103), dont les canaux de sortie fournissent séparément une fraction sucre (ZZ) et une fraction hyperprotéique (LL) de grains exempts d'huile (Z).

14. Installation selon la revendication 13 **caractérisée en ce que** le canal de sortie de la fraction sucre (ZZ) des moyens de séparation du sucre (103) est relié en cascade à au moins un parmi des moyens de fermentation alcoolique (110) suivis des moyens de distillation (111) afin d'obtenir un alcool (E) et/ou au moins un parmi les premiers (105), deuxièmes (106), troisièmes (107), quatrièmes (108), cinquièmes (109) moyens de fermentation pour obtenir, au moins, des acides organiques (AO) et des antibiotiques (AN).

15. Installation selon la revendication 13 **caractérisée en ce que** le canal de sortie (LL) des moyens de séparation du sucre (103) est relié aux moyens d'hydrolyse protéolytique correspondants (113), qui alimentent un séparateur (114) approprié pour obtenir séparément des acides aminés (N) et des fibres alimentaires (AF).
